# EUROPÄISCHE PATENTSCHRIFT

(11) **EP 2 386 479 B1**
(45) Veröffentlichungstag und Bekanntmachung des Hinweises auf die Patenterteilung: **03.01.2018**
(21) Anmeldenummer: 11002864.4
(22) Anmeldetag: 06.04.2011
(51) Int. Cl.: B63H 21/30, B63G 8/08, F16F 3/087

(54) **Lagerungselement zur Lagerung eines dynamisch aktiven Aggregats in einem Unterseeboot**
Storage element for storing a dynamically active power unit in a submarine
Elément de stockage pour le stockage d'un agrégat dynamique actif dans un sous-marin

(30) Priorität: 12.05.2010 DE 102010020386
(43) Veröffentlichungstag der Anmeldung: 16.11.2011
(73) Patentinhaber: ThyssenKrupp Marine Systems GmbH, 24143 Kiel (DE)
(72) Erfinder: Schlägel, Matthias, Dr., 3037 Herrenschwanden (CH); Wloka, Markus, 24226 Heikendorf (DE)
(74) Vertreter: thyssenkrupp Intellectual Property GmbH

(56) Entgegenhaltungen:
- EP-A1- 2 065 617
- WO-A1-91/12440
- GB-A- 718 605
- GB-A- 932 086
- GB-A- 2 244 784
- GB-A- 2 337 313
- SU-A1- 977 862
- US-A- 2 749 114

## Beschreibung

Die Erfindung betrifft ein Lagerungselement zur Lagerung eines dynamisch aktiven Aggregats in einem Unterseeboot mit den im Oberbegriff des Anspruchs 1 angegebenen Merkmalen.

Es ist bekannt, dynamisch aktive Aggregate in militärisch genutzten Unterseebooten elastisch zu lagern, um die von den Aggregaten erzeugten Schwingungen vor der Einleitung in die Tragstruktur eines Unterseebootes zu dämpfen und so den auf die Tragstruktur bzw. den Druckkörper des Unterseebootes übertragenen Körperschall zu verringern. Die hierzu in bekannten Unterseebooten verwendeten Lagerungselemente weisen einen nachgebenden Feder-/Dämpfungskörper aus einem Elastomer auf.

Der Feder-/Dämpfungskörper solcher Lagerungselemente muss eine ausreichend große statische Steifigkeit aufweisen, da diese Steifigkeit den Einfederweg des Lagerungselements bestimmt. Dabei wird die statische Steifigkeit so gewählt, dass sich die daraus ergebende erste Eigenfrequenz des Lagerungselements in geeigneter Weise auf die Eigenfrequenz des zu lagernden Aggregats abgestimmt ist.

Die GB 2 244 784 A zeigt verschiedene Ausgestaltungen eines Elastomerlagers. Sämtliche dieser gezeigten Elastomerlager haben einen Aufbau, wonach zwischen zwei starren parallel zueinander angeordneten Metallendstücken ein Paar elastomerer Lagerkörper gehalten sind. Die Lagerelemente sind in jedem Fall beabstandet zueinander gehalten.

Neben der statischen Steifigkeit der Feder-/Dämpfungskörper dieser Lagerungselemente ist auch deren dynamische Steifigkeit bedeutsam. Die dynamische Steifigkeit ergibt sich als Quotient aus der dynamischen Auflagerkraft unter dem Lagerungselement und der von dem zu lagernden Aggregat erzeugten Anregungsamplitude auf das Lagerungselement. Es hat sich gezeigt, dass die Feder-/Dämpfungskörper aus einem Elastomer ab einer gewissen von dem zu lagernden Aggregat verursachten Anregungsfrequenz in einem oberen Frequenzbereich verhärten, was bei der Körperschallübertragung von dem Lagerungselement auf die Tragstruktur eines Unterseebootes zu hohen Schallpegeln führt. Bei einem militärischen Unterseeboot hat dies typischerweise gravierende Folgen, da die von dem Unterseeboot ausgehenden Geräusche gegebenenfalls die Ortung und Bekämpfung des Unterseeboots durch feindliche Kräfte ermöglichen.

Vor diesem Hintergrund liegt der Erfindung die Aufgabe zugrunde, ein Lagerungselement zur Lagerung eines dynamisch aktiven Aggregats in einem Unterseeboot zu schaffen, das gegenüber den bislang bekannten Lagerungselementen verbesserte akustische Eigenschaften aufweist.

Gelöst wird diese Aufgabe durch ein Lagerungselement mit den in Anspruch 1 angegebenen Merkmalen. Vorteilhafte Weiterbildungen dieses Lagerungselements ergeben sich aus den Unteransprüchen, der nachfolgen Beschreibung sowie der Zeichnung. Hierbei können gemäß der Erfindung, die in den Unteransprüchen angegebenen Merkmale jeweils für sich aber auch in technologisch sinnvoller Kombination die erfindungsgemäße Lösung gemäß Anspruch 1 weiter ausgestalten.

Das erfindungsgemäße Lagerungselement zur Lagerung eines dynamisch aktiven Aggregats in einem Unterseeboot weist einen formstabilen Abschnitt auf, auf dem sich das zu lagernde Aggregat, beispielsweise ein elektrischer Fahrmotor des Unterseebootes, abstützt. Bezogen auf diesen formstabilen Abschnitt bootsseitig, also zur Außenhülle des Bootes hingerichtet angeordnet, weist das Lagerungselement einen Abschnitt aus einem Elastomer auf. Dieser letztgenannte Abschnitt ist demnach elastisch nachgebend ausgebildet und dient zur Dämpfung von Schwingungen, die von dem zu lagernden Aggregat auf das Lagerungselement ausgeübt werden. Der aus einem Elastomer bestehende Abschnitt ist mit dem formstabilen Abschnitt stoffschlüssig verbunden. Gegebenenfalls kann an der von dem formstabilen Abschnitt abgewandten Seite des Abschnitts aus einem Elastomer ein weiterer formstabiler Abschnitt angeordnet sein, der zur Befestigung des Lagerungselements an der Tragstruktur des Unterseebootes dient.

Gemäß der Erfindung weist der Abschnitt aus einem Elastomer zumindest einen diesen Abschnitt funktional teilenden Freiraum auf. Demnach ist der aus Elastomer ausgebildete Abschnitt bei dem erfindungsgemäßen Lagerungselement nicht in Form eines in den bislang bekannten Lagerungselementen dieser Art verwendeten kompakten einteiligen Abschnitts aus Elastomer ausgestaltet sondern ist durch einen oder mehrere Freiräume in zwei oder mehr funktionale Elastomerbereiche aufgeteilt. Die Aufteilung des aus Elastomer ausgebildeten Abschnitts kann derart sein, dass dieser Abschnitt zwei oder mehr vollständig von einander getrennte und/oder lediglich schwach miteinander gekoppelte, d.h. noch in gewisser Weise stofflich miteinander verbundene Elastomerbereiche aufweist. In letztgenanntem Fall können an dem Abschnitt Ausnehmungen oder vorzugsweise Durchbrechungen ausgebildet sein. Durch den zumindest einen Freiraum im Inneren des Abschnitts aus Elastomer, durch den benachbarte Elastomerbereiche beabstandet sind, weist dieser Abschnitt aus Elastomer gegenüber einem einteilig ausgebildeten Abschnitt gleicher Größe eine größere freie Oberfläche auf und ermöglicht bei einer dynamischen Belastung im Vergleich zu dem einteilig ausgebildeten Abschnitt aus Elastomer größere elastische Verformungen. D.h., durch den einen oder mehrere an dem Abschnitt aus Elastomer ausgebildete Freiräume wird die dynamische Steifigkeit gegenüber einem vergleichbaren kompakt ausgebildeten Abschnitt dieser Art verringert. Durch die Verringerung der dynamischen Steifigkeit wird erreicht, dass sich der aus Elastomer ausgebildete Abschnitt des erfindungsgemäßen Lagerungselements erst bei höheren von dem zu lagernden Aggregat verursachten Anregungsfrequenzen verhärtet. Bei entsprechender Planung der Anzahl und Anordnung der Freiräume, beispielsweise mit Hilfe einer Finite-Elemente-Simulation, kann günstigstenfalls erreicht werden, dass die Verhärtung des aus Elastomer ausgebildeten Abschnitts erst bei Frequenzen erfolgt, die außerhalb des Anregungsfrequenzspektrums des zu lagernden Aggregats liegen, sodass von dem Lagerungselement kein, und wenn ein zu vernachlässigender, Körperschall auf die Tragstruktur des Unterseebootes übertragen wird.

Vorteilhaft kann der Abschnitt aus Elastomer mehrteilig ausgebildet sein. In diesem Fall wird der Abschnitt aus Elastomer von mindestens zwei separaten Elastomerkörpern gebildet, die durch einen spaltförmigen Freiraum räumlich von einander getrennt sind. Die Größe, Form und Anordnung der Elastomerkörper ist hierbei grundsätzlich beliebig und richtet sich neben dem verwendeten Elastomermaterial vor allem nach der Lagerungsaufgabe des Lagerungselements.

Erfindungsgemäß wird der Abschnitt aus Elastomer bei dem erfindungsgemäßen Lagerungselement von zumindest zwei parallel zueinander angeordneten Elastomerkörpern gebildet. So kann der Abschnitt aus Elastomer von zwei oder mehr Elastomerkörpern gebildet werden, die in einer Ebene in Richtung von dem formstabilen Abschnitt zur Abstützung des Aggregats zu einer an dem Lagerungselement ausgebildeten Auflagefläche des Lagerungselement auf der Stützstruktur des Unterseebootes getrennt nebeneinander angeordnet sind, wobei sie vorzugsweise jeweils über einen freien Spalt voneinander beabstandet sind.

Zweckmäßigerweise ist anzustreben, dass das erfindungsgemäße Lagerungselement trotz der gegenüber bekannten Lagerungselementen verringerten dynamischen Steifigkeit eine ausreichen große statische Steifigkeit aufweist. Aus diesem Grund sind vorteilhafterweise Versteifungsmittel zur Erhöhung der statischen Steifigkeit des aus Elastomer ausgebildeten Abschnitts des Lagerungselements vorgesehen.

In diesem Zusammenhang ist eine Ausgestaltung bevorzugt, bei der die Elastomerkörper in zumindest einer Ebene geteilt sind, die zwischen dem zur Abstützung des Aggregats dienenden formstabilen Abschnitt und einer an dem Lagerungselement ausgebildeten Auflagefläche zur bootsseitigen Auflage des Lagerungselements liegt. In der so erzeugten Teilungsebene der Elastomerkörper ist vorteilhaft ein Versteifungsbauteil angeordnet, das eine größere Steifigkeit als die Elastomerkörper aufweist und die durch die Teilungsebene getrennten Elastomerkörper verbindet. Durch geeignete Wahl und Anzahl der innerhalb des elastisch nachgebenden Abschnitts angeordneten Versteifungsbauteile, die vorzugsweise als formstabile Platten ausgebildet sind, wird der elastisch nachgebende Abschnitt so versteift, dass das erfindungsgemäße Lagerungselement eine ausreichend hohe statische Steifigkeit bei gleichzeitig geringer dynamischer Steifigkeit aufweist.

Es ist bereits erwähnt worden, dass nebeneinander angeordnete Elastomerkörper entweder vollständig voneinander getrennt oder noch schwach miteinander gekoppelt sein können. Erfindungsgemäß ist eine Ausgestaltung vorgesehen, bei der benachbarte ElastomerKörper durch Verbindungsstege miteinander verbunden sind und die miteinander verbundenen Elastomerkörper ein gemeinsames Bauteil bilden.

So kann gemäß einer weiteren vorteilhaften Weiterbildung des erfindungsgemäßen Lagerungselements der elastisch nachgebende Abschnitt von mindestens einem Elastomerbauteil gebildet sein, an dem in zumindest einer Ebene in Richtung von dem formstabilen Abschnitt zur

Abstützung des zu lagernden Aggregats zu einer an dem Lagerungselement ausgebildeten Auflagefläche zur bootsseitigen Auflage des Lagerungselements in Reihe hintereinander mehrere Durchbrechungen ausgebildet sind. Diese Durchbrechungen sind bevorzugt länglich gerade ausgebildet und bilden so eine durch Verbindungsstege unterbrochene Teilungsebene.

Wie bereits angemerkt worden ist, ist das erfindungsgemäße Lagerungselement zum Einsatz in einem Unterseeboot vorgesehen. Ein solches Unterseeboot bildet auch Teil der Erfindung. Dieses Unterseeboot weist eine Lagerungsvorrichtung zur Lagerung eines dynamisch beanspruchten Bauteils zum Beispiel des elektrischen Fahrmotors auf. Die Lagerungsvorrichtung ist mit zumindest einem Lagerungselement wie oben beschrieben oder mehreren dieser Lagerungselemente ausgestattet. Durch die vorteilhaften akustischen Eigenschaften der verwendeten Lagerungselemente wird sichergestellt, dass von der Lagerungseinrichtung in dem Unterseeboot kein oder ein zu tolerierender Körperschall auf die Tragstruktur des Unterseeboots und insbesondere auf dessen Druckkörper übertragen wird.

Nachfolgend ist die Erfindung anhand von den in der Zeichnung dargestellten Ausführungsbeispielen näher erläutert. In der Zeichnung zeigt:
- Fig. 1: in einer stark-vereinfachten Prinzipsskizze ein erstes Lagerungselement in einer Seitenansicht,
- Fig. 2: das Lagerungselement gemäß Fig. 1 in einem Schnitt entlang der Schnittlinie II-II in Fig. 1,
- Fig. 3: in einer stark vereinfachten Prinzipsskizze ein zweites Lagerungselement in einer Seitenansicht und
- Fig. 4: das Lagerungselement gemäß Fig. 1 in einem Schnitt entlang der Schnittlinie IV-IV in Fig. 3.

Die in der Zeichnung dargestellten Lagerungselemente haben jeweils eine quaderförmige Außenkontur. Beide Lagerungselemente weisen einen formstabilen Abschnitt 2 in Form einer rechteckigen Platte 2 auf, auf der sich ein zu lagerndes, in der Zeichnung nicht dargestelltes, dynamisch aktives Aggregat abstützt. Die Platte 2 ist vorzugsweise aus Stahl oder einem Faserverbundwerkstoff ausgebildet.

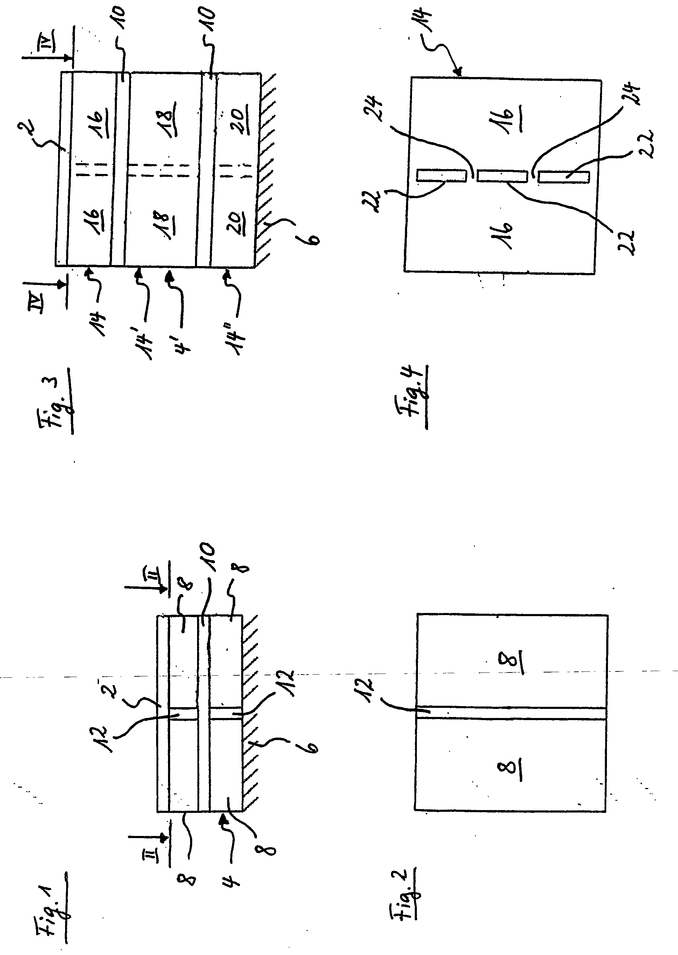

Bei beiden dargestellten Lagerungselementen schließt sich an einer Flachseite der Platte 2, die von der zur Abstützung des zu lagernden Aggregats dienenden Flachseite der Platte 2 abgewandt ist, ein Abschnitt 4 (Fig. 1) bzw. 4' (Fig. 3) an, der im Wesentlichen aus Elastomer ausgebildet ist. Die Abschnitte 4 und 4' sind jeweils stoffschlüssig mit der Platte 2 verbunden, im vorliegenden Fall durch Vulkanisieren. An der von der Platte 2 abgewandten Seite liegen die Abschnitte 4 und 4' jeweils auf einer Tragstruktur 6 eines Unterseebootes auf.

Die Abschnitte 4 und 4' bilden den elastisch nachgebenden Abschnitt bzw. das Feder-/Dämpfungselement der beiden in der Zeichnung dargestellten Lagerungselemente. Sowohl bei dem in Fig. 1 gezeigten Lagerungselement als auch bei dem in Fig. 3 dargestellten Lagerungselement ist der Abschnitt 4 bzw. 4' mehrteilig ausgebildet. Hierdurch wird die dynamische Steifigkeit des Abschnitts 4 bzw. 4' gegenüber einem zweiteiligen Abschnitt 4 bzw. 4' gegenüber einer einteiligen Ausgestaltung des Abschnitts 4 bzw. 4' verringert.

So besteht der Abschnitt 4 des Lagerungselements nach den Fig. 1 und 2 aus vier Elastomerkörpern 8. Diese weisen alle eine quaderförmige äußere Form und die gleiche Größe auf. Die Elastomerkörper 8 sind paarweise in zwei übereinander liegenden Ebenen in Richtung von der Platte 2 zu der Tragstruktur 6 angeordnet. Demzufolge ist der Abschnitt 4 in einer Ebene zwischen der Platte 2 und der Tragstruktur 6 geteilt. In dieser Teilungsebene ist ein Versteifungsbauteil 10 in Form einer rechteckigen Platte 10 angeordnet. Die Platte 10 weist eine höhere statische Steifigkeit als die Elastomerkörper 8 auf und dient dazu, die statische Gesamtsteifigkeit des Abschnitts 4 zu vergrößern. Die Platte 10, die mit allen Elastomerkörpern 8 stoffschlüssig verbunden ist, trennt räumlich zwei parallel zueinander ausgerichtete Elastomerkörper 8, die zwischen der Platte 10 und der Tragstruktur 6 angeordnet sind, von zwei ebenfalls parallel zueinander ausgerichteten Elastomerkörpern 8, die zwischen der Platte 10 und der Platte 2 angeordnet sind. Die zwischen der Platte 10 und der Tragstruktur 6 angeordneten Elastomerkörper 8 sind wie die zwischen der Platte 10 und der Platte 2 angeordneten Elastomerkörper 8 jeweils über einen Spalt 12 voneinander beabstandet.

Bei dem in den Fig. 3 und 4 dargestellten Lagerungselement ist der aus Elastomer bestehende Abschnitt 4' in zwei parallel zu den Flachseiten der Platte 2 ausgerichteten Ebenen in drei quaderförmige Elastomerteile 14, 14' und 14" unterschiedlicher Größe geteilt. In den beiden Teilungsebenen ist zur Vergrößerung der statischen Steifigkeit des Abschnitts 4' jeweils ebenfalls ein Versteifungsbauteil 10 in Form einer rechteckigen Platte 10 angeordnet, die eine größere statische Steifigkeit als die Elastomerteile 14, 14' und 14" aufweisen.

In Richtung senkrecht zu den Flachseiten der Platten 10 bzw. zu den Flachseiten der Platte 2 ist das Elastomerteil 14 in zwei gleichgroße Elastomerkörper 16, das Elastomerteil 14' in zwei gleichgroße Elastomerkörper 18 und das Elastomerteil 14" in zwei gleichgroße parallel zueinander ausgerichtete Elastomerkörper 20 geteilt, um hierdurch die dynamische Steifigkeit des Abschnitts 4' gegenüber einem einteilig ausgebildeten Elastomerabschnitt gleicher Größe zu verringern.

Im Gegensatz zu dem in den Fig. 1 und 2 dargestellten Lagerungselement sind die parallel zueinander angeordneten Elastomerkörper 16, 18 und 20 jeweils nicht durchgehend voneinander getrennt. Stattdessen erfolgt die Teilung der Elastomerteile 14, 14' und 14" durch drei längliche Durchbrechungen 22, die in Reihe hintereinander und voneinander beabstandet angeordnet sind. Auf diese Weise sind benachbarte Elastomerkörper 16, 18 und 20 jeweils über schmale Verbindungsstege 24 miteinander verbunden.

### Bezugszeichenliste

- 2: - Abschnitt, Platte
- 4, 4': - Abschnitt
- 6: - Tragstruktur
- 8: - Elastomerkörper
- 10: - Versteifungsbauteil, Platte
- 12: - Spalt
- 14, 14', 14": - Elastomerteil
- 16: - Elastomerkörper
- 18: - Elastomerkörper
- 20: - Elastomerkörper
- 22: - Durchbrechung
- 24: - Verbindungssteg

## Patentansprüche

1. Lagerungselement zur Lagerung eines dynamisch aktiven Aggregats in einem Unterseeboot mit einem formstabilen Abschnitt (2), auf welchem sich das zu lagernde Aggregat abstützt, und mit einem bezogen auf den formstabilen Abschnitt (2) bootsseitig angeordneten Abschnitt (4') aus einem Elastomer, welcher mit dem formstabilen Abschnitt (2) stoffschlüssig verbunden ist und von zumindest zwei parallel zueinander angeordneten Elastomerkörpern (16, 18, 20) gebildet wird, wobei der Abschnitt (4') aus einem Elastomer zumindest einen diesen Abschnitt (4') funktional teilenden Freiraum aufweist, **dadurch gekennzeichnet, dass** benachbarte Elastomerkörper (16, 18, 20) durch Verbindungsstege (24) miteinander verbunden sind, wobei die miteinander verbundenen Elastomerkörper ein gemeinsames Bauteil bilden.

2. Lagerungselement nach Anspruch 1, **dadurch gekennzeichnet, dass** der Abschnitt (4') aus Elastomer mehrteilig ausgebildet ist.

3. Lagerungselement nach einem der vorangehenden Ansprüche, **dadurch gekennzeichnet, dass** Versteifungsmittel zur Erhöhung der statischen Steifigkeit des Abschnitts (4') aus Elastomer vorgesehen sind.

4. Lagerungselement nach einem der vorangehenden Ansprüche, **dadurch gekennzeichnet, dass** der Abschnitt (4') aus Elastomer in zumindest einer Ebene zwischen dem formstabilen Abschnitt (2) zur Abstützung des zu lagernden Aggregats und einer an dem Lagerungselement ausgebildeten Auflagefläche zur bootsseitigen Auflage des Lagerungselements geteilt ist, wobei in einer Teilungsebene des Abschnitts (4') aus Elastomer ein Versteifungsbauteil (10) angeordnet ist, welches eine höhere Steifigkeit als die Elastomerkörper (16, 18, 20) aufweist und die durch die Teilungsebene getrennten Elastomerkörper (16, 18, 20) verbindet.

5. Lagerungselement nach Anspruch 1, **dadurch gekennzeichnet, dass** der elastisch nachgebende Abschnitt (4') von mindestens einem Elastomerteil (14, 14', 14") gebildet wird, an dem in zumindest einer Ebene in Richtung von dem formstabilen Abschnitt (2) zur Abstützung des zu lagernden Aggregats zu einer an dem Lagerungselement ausgebildeten Auflagefläche zur bootsseitigen Auflage des Lagerungselements in Reihe hintereinander mehrere Durchbrechungen (22) ausgebildet sind.

6. Unterseeboot mit einer Lagerungsvorrichtung zur Lagerung eines dynamisch beanspruchten Bauteils, **dadurch kennzeichnet, dass** die Lagerungsvorrichtung zumindest ein Lagerungselement nach einem der vorangehenden Merkmale aufweist.

## Claims

1. Mounting element for mounting a dynamically active unit in a submarine, having a dimensionally stable portion (2) on which the unit to be mounted is supported and having a portion (4') made of an elastomer which is arranged on the submarine side with respect to the dimensionally stable portion (2), is connected to the dimensionally stable portion (2) in an integrally bonded manner and is formed by at least two elastomer bodies (16, 18, 20) arranged parallel to one another, wherein the portion (4') made of an elastomer comprises at least one cavity which functionally divides this portion (4'), **characterized in that** adjacent elastomer bodies (16, 18, 20) are interconnected by connecting webs (24), wherein the interconnected elastomer bodies form a common component.

2. Mounting element according to Claim 1, **characterized in that** the portion (4') made of elastomer is of multi-part design.

3. Mounting element according to one of the preceding claims, **characterized in that** stiffening means are provided for increasing the static stiffness of the portion (4') made of elastomer.

4. Mounting element according to one of the preceding claims, **characterized in that** the portion (4') made of elastomer is divided in at least one plane between the dimensionally stable portion (2) for supporting the unit to be mounted and a bearing surface, which is formed on the mounting element, for bearing the mounting element on the submarine side, wherein a stiffening component (10) is arranged in a parting plane of the portion (4') made of elastomer, which stiffening component has a higher stiffness than the elastomer bodies (16, 18, 20) and connects the elastomer bodies (16, 18, 20) separated by the parting plane.

5. Mounting element according to Claim 1, **characterized in that** the elastically flexible portion (4') is formed by at least one elastomer part (14, 14', 14") in which a plurality of through-openings (22) are formed behind one another in a row in at least one plane in the direction from the dimensionally stable portion (2) for supporting the unit to be mounted to a bearing surface, which is formed on the mounting element, for bearing the mounting element on the submarine side.

6. Submarine having a mounting device for mounting a dynamically loaded component, **characterized in that** the mounting device comprises at least one mounting element according to one of the preceding features.

## Revendications

1. Élément de support pour le support d'un agrégat dynamique actif dans un sous-marin, comprenant une partie de forme stable (2) sur laquelle s'appuie l'agrégat à supporter, et comprenant une partie (4') en élastomère disposée du côté du sous-marin par rapport à la partie de forme stable (2), qui est reliée par engagement par liaison de matière à la portion de forme stable (2) et qui est formée par au moins deux corps en élastomère disposés parallèlement l'un à l'autre (16, 18, 20), la partie (4') en élastomère présentant au moins un espace libre divisant fonctionnellement cette partie (4'), **caractérisé en ce que** des corps en élastomère adjacents (16, 18, 20) sont reliés les uns aux autres par des nervures de liaison (24), les corps en élastomère reliés les uns aux autres formant un composant commun.

2. Élément de support selon la revendication 1, **caractérisé en ce que** la partie (4') en élastomère est réalisée en plusieurs parties.

3. Élément de support selon l'une quelconque des revendications précédentes, **caractérisé en ce que** des moyens de rigidification sont prévus pour augmenter la rigidité statique de la partie (4') en élastomère.

4. Élément de support selon l'une quelconque des revendications précédentes, **caractérisé en ce que** la partie (4') en élastomère est séparée dans au moins un plan entre la partie de forme stable (2) pour supporter l'agrégat à supporter et une surface d'appui réalisée au niveau de l'élément de support pour l'appui du côté du sous-marin de l'élément de support, un composant de rigidification (10) étant disposé dans un plan de séparation de la partie (4') en élastomère, lequel présente une plus grande rigidité que les corps en élastomère (16, 18, 20) et relie les corps en élastomère (16, 18, 20) séparés par le plan de séparation.

5. Élément de support selon la revendication 1, **caractérisé en ce que** la partie flexible élastiquement (4') est formée par au moins une partie en élastomère (14, 14', 14'') au niveau de laquelle plusieurs ouvertures (22) en rangées les unes derrière les autres sont réalisées dans au moins un plan dans la direction allant de la partie de forme stable (2) pour le support de l'agrégat à supporter vers une surface d'appui réalisée sur l'élément de support en vue de l'appui du côté du sous-marin de l'élément de support.

6. Sous-marin comprenant un dispositif de support pour le support d'un composant sollicité de manière dynamique, **caractérisé en ce que** le dispositif de support présente au moins un élément de support selon l'une quelconque des revendications précédentes.
